# EUROPEAN PATENT SPECIFICATION

(11) **EP 1 995 148 B1**
(45) Date of publication and mention of the grant of the patent: **16.02.2011**
(21) Application number: 08009480.8
(22) Date of filing: 23.05.2008
(51) Int. Cl.: B61L 15/00, G06F 11/20, H04L 12/40

(54) **Transmission system for rail vehicles using two redundant bus systems**
Übertragungssystem für Schienenfahrzeuge mit zwei redundanten Bussystemen
Système de transmission pour véhicules ferroviaires utilisant deux systèmes de bus redondants

(30) Priority: 24.05.2007 JP 2007138254
(43) Date of publication of application: 26.11.2008
(73) Proprietor: Kabushiki Kaisha Toshiba, Minato-ku, Tokyo 105-8001 (JP)
(72) Inventor: Takahashi, Hideyuki, Tokyo (JP)
(74) Representative: HOFFMANN EITLE

(56) References cited:
- WO-A-98/59464
- DE-A1- 19 904 543
- US-A- 5 404 465

## Description

### BACKGROUND OF THE INVENTION

### 1. Field of the Invention

The present invention relates to a transmission system for rail vehicles and more particularly relates to a transmission system for rail vehicles employing a network.

### 2. Description of the Related Art

When a network for rail vehicles is constituted using Ethernet (registered trademark of XEROX Ltd) as specified in IEEE 802.3, which is a typical commonly-used network, a single-layer bus network construction results. However, in the case of rail vehicles, due to the need to ensure increased safety in regard to transport of persons, redundancy is required, so a duplicated network must be employed, in which two single-layer bus networks are used. Accordingly, in a conventional transmission system for rail vehicles and equipment connected therewith, connection of the duplicated transmission network equipment was performed using an RS (Recommended Standard)-485 multidrop connection.

However, the basis of most networks such as Ethernet is one-to-one connection (point-to-point connection). When this is applied to a network for rail vehicles, two network interfaces (I/F) are required for each device. Also, since the networks operate independently and data flows from both networks to a given device, there were problems such as that the device might not be able to determine which data should be selected as valid, or that such a decision was extremely difficult. A further problem was that, conventionally, signal changeover between transmitters and devices is effected using for example a relay and when this is done it is necessary to change over the output of the transmitters of all of the vehicles; however, when there is an abnormality of the network, it may only be possible to change over the outputs of some of these.

Examples are Laid-open Japanese Patent Application No. Tokkai 2001-286001 (hereinbelow referred to as Patent Reference 1) or Tokkai 2006-117024 (hereinbelow referred to as Patent Reference 2).

In US-A-5,404,465 there is disclosed a method and apparatus for monitoring and switching over to a back-up bus in a redundant train line monitor system, in particular switching over from a primary bus to the back-up bus in a network having a master node and at least one slave node, the primary bus and the back-up bus each interconnecting the master node and the at least one slave node. The method includes periodically sending via the back-up bus from the master node to each of the slave nodes a master test packet containing a master address of the master node on the back-up bus and sending on the back-up bus from the at least one slave node to the master node and in response to receiving the master test packet, a slave test packet containing a slave address of the at least one slave node on the back-up bus. The method further includes indicating failures on the primary and the back-up bus and disconnecting the primary bus from the master node and the at least one slave node and resuming communications between the master node and the at least one slave node via the back-up bus when a failure occurs on the primary bus and no failures occur on the back-up bus.

In WO 98/59464 there is disclosed a redundant serial bus and a method for the operation thereof. In order to connect serial bus systems known per se by redundantly configured bus lines without using systems-integrated redundancy means, there is provided an upstream redundancy means which is switched between the bus communication interface of a bus-user and the redundant bus lines. This enables continuous transmission to occur on all bus lines and an interference-free bus line to be selected for reception.

In DE 199 04 543 A1 there is disclosed a bus coupler which includes two slave connections for connecting to a redundant master bus system. A master connection is provided for connecting to a non-redundant slave bus system. A control unit is provided which controls the data transmission between the slave connections and the master connections. Preferably, the control unit transmits data from the non-redundant slave bus system to the redundant master bus system via both slave connections. Data from the redundant master bus system are transmitted to the non-redundant slave bus system via only one of the both slave connections.

### SUMMARY OF THE INVENTION

Accordingly one object of the present invention is to provide a novel transmission system for rail vehicles whereby a network with high redundancy and excellent maintenance characteristics can be constructed.

According to one aspect of the present invention there is provided a transmission system for rail vehicles comprising: a respective system 1 transmitter for each of a plurality of rail vehicles, each system 1 transmitter having a plurality of transmission ports, being arranged in the respective rail vehicles and being adapted to transmit data received from any of said ports to a required transmission port in response to a prescribed instruction; a respective system 2 transmitter for each of the plurality of rail vehicles, each system 2 transmitter having a plurality of transmission ports, being arranged in the respective rail vehicle and being adapted to transmit data received from any of said ports to a required transmission port in response to a prescribed instruction; a system 1 transmission path connected between the system 1 transmitters of said plurality of rail vehicles; a system 2 transmission path connected between the system 2 transmitters of said plurality of rail vehicles; and a respective transmission switch for each of the plurality of rail vehicles adapted to connect via respective branch transmission paths the respective system 1 transmitter and system 2 transmitter arranged in the same rail vehicle with a respective plurality of devices, arranged in the same rail vehicle, and characterized in that: each said transmission switch is equipped with a control function for transmitting incoming data from any of said connected plurality of devices to the respective system 1 transmitter and the respective system 2 transmitter, and for transmitting incoming data from one or both of the respective system 1 transmitter and the respective system 2 transmitter to at least a destination device of the connected plurality of devices, and employing either system 1 type data or system 2 type data in accordance with a pre-set priority mode.

By means of the transmission system for rail vehicles according to the present invention, a network for rail vehicles with high redundancy and excellent maintenance characteristics can be constructed.

### BRIEF DESCRIPTION OF THE DRAWINGS

A more complete appreciation of the present invention and many of the attendant advantages thereof will be ready obtained as the same becomes better understood by reference to the following detailed description when considered in connection with the accompanying drawings, wherein:
FIG. 1 is a block diagram of a transmission system for rail vehicles according to an embodiment of the present invention;
FIG. 2 is a block diagram of a transmission switch in a transmission system for rail vehicles according to the above embodiment;
FIG. 3 is a diagram of the structure of transmission data in a transmission system for rail vehicles according to the above embodiment;
FIG. 4 is a block diagram showing the operation of a transmission switch of vehicle No. 1 in a transmission system for rail vehicles according to the above embodiment;
FIG. 5 is a block diagram showing the operation of data transmission in respect of data transmission from a device (3) of vehicle No. 1 in a transmission system for rail vehicles according to the above embodiment;
FIG. 6 is a block diagram showing the operation of a transmission switch of vehicle No. 4 in a transmission system for rail vehicles according to the above embodiment;
FIG. 7 is a block diagram showing the operation of data transmission when data is transmitted from the device (3) of vehicle No. 1 in a condition in which the system 1 transmitter of the No. 3 vehicle is faulty, in a transmission system for rail vehicles according to the above embodiment;
FIG. 8 is a block diagram showing the operation of data transmission of a transmission switch of the No. 2 vehicle when data is transmitted from the device (3) of the No. 1 vehicle in a condition in which the system 1 transmitter of the No. 3 vehicle is faulty, in a transmission system for rail vehicles according to the above embodiment;
FIG. 9 is a block diagram showing the operation of data transmission of a transmission switch of the No. 3 vehicle in the case where data is transmitted from the device (3) of the No. 1 vehicle in a condition in which the system 1 transmitter of the No. 3 vehicle is faulty, in a transmission system for rail vehicles according to the above embodiment; and
FIG. 10 is a block diagram showing the operation of data transmission of a transmission switch of the No. 4 vehicle in the case where data is transmitted from the device (3) of the No. 1 vehicle in a condition in which the system 1 transmitter of the No. 3 vehicle is faulty, in a transmission system for rail vehicles according to the above embodiment.

### DETAILED DESCRIPTION OF THE PREFERRED EMBODIMENTS

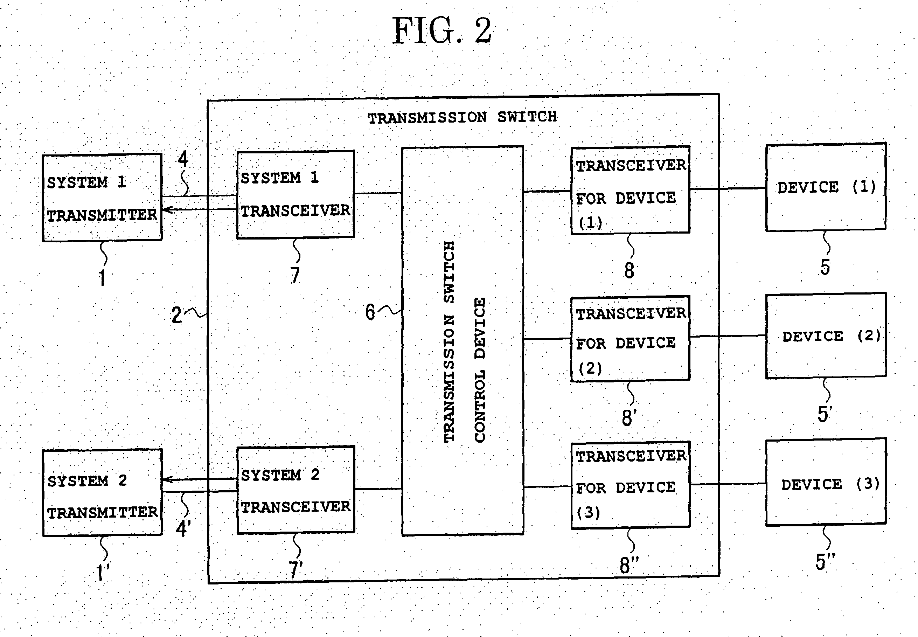

Referring now to the drawings, wherein like reference numerals designate identical or corresponding parts throughout the several views, and more particularly to FIG. 2 thereof, one embodiment of the present invention will be described.

An embodiment of the present invention is described in detail below with reference to the drawings.

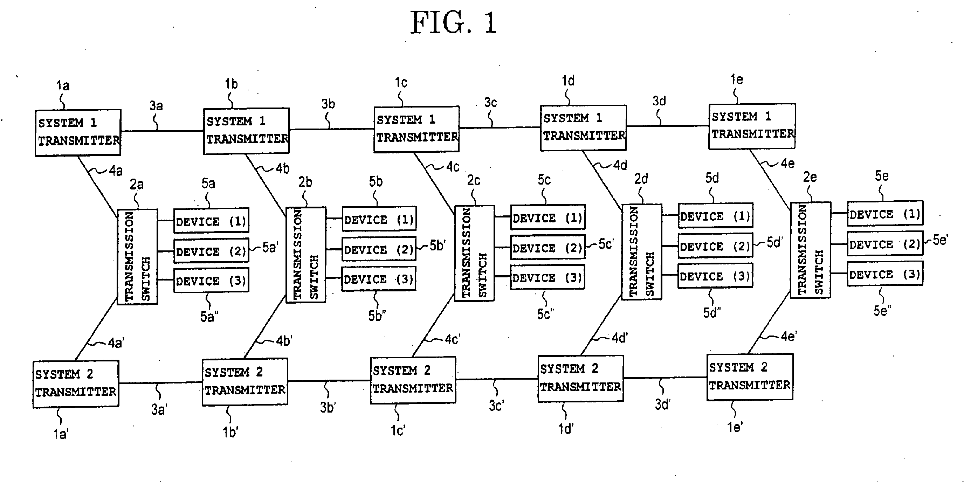

FIG. 1 shows the layout of a transmission system for a rail vehicle according to one embodiment of the present invention; FIG. 2 shows the layout of a transmission switch in this transmission system for rail vehicles. System 1 transmitters 1a to 1e and system 2 transmitters a' to le' are respectively mounted in each vehicle. The system 1 transmitters 1a to 1e perform exchange of data by being connected in point-to-point fashion by the main transmission paths 3a to 3d of system 1. The system 2 transmitters 1a' to le' likewise perform exchange of data by being connected in point-to-point fashion by the main transmission paths 3a' to 3d' of system 2. Also, the transmission switches 2a to 2e are mounted in each vehicle with devices (1) 5a to 5e, devices (2) 5a' to 5e', and devices (3) 5a", 5e" being respectively connected with the system 1 transmitters 1a to 1e by the branch transmission paths 4a to 4e and also respectively connected with the system 2 transmitters 1a' to 1e' by the branch transmission paths 4a' to 4e'. It should be noted that, in the following description, the symbols 1a to 1e, 1a' to 1e', 2a to 2e and 2a' to 2e' etc are employed when there is a need to distinguish the individual constituent elements, but, when there is no need to distinguish the individual elements, these are represented by the symbols 1, 1', 2, 2' etc.

As shown in FIG. 2, the transmission switches 2 comprise: a system 1 transceiver 7 that transmits with respect to the system 1 transmitter 1; a system 2 transceiver 7' that transmits with respect to the system 2 transmitter 1'; a transceiver 8 for the devices (1) that transmits with respect to the devices (1) 5; a transceiver 8' for the devices (2) that transmits with respect to the devices (2) 5'; a transceiver 8" for the devices (3) that transmits with respect to the devices (3) 5"; and a transmission switch control device 6 that controls the transceivers 7, 7', 8, 8', and 8". Regarding the transceivers 8, 8', and 8" for the devices, it should be noted that, although the case where three individual transceivers are provided was described, a common transceiver or a plurality could be employed.

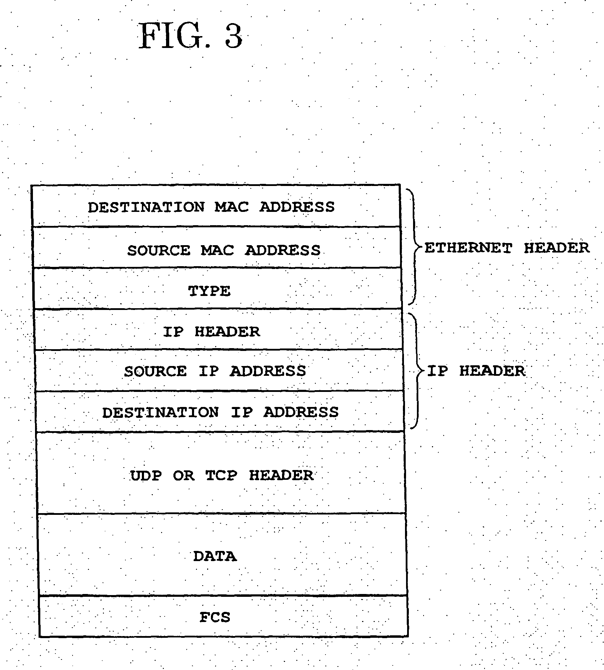

As described with reference to FIG. 3, the data transmitted and received by the system 1 transmitter 1 or the system 2 transmitter 1' comprises: an Ethernet header (destination MAC (Media Access Control) address+source address+type); IP (Internet Protocol) header (including source IP address/destination IP address); TCP (Transmission Control Protocol) header or UDP (User Datagram Protocol) header, data information and CRC check data (FCS = Frame Check Sequence). These data are generally referred to as the "Ethernet frame".

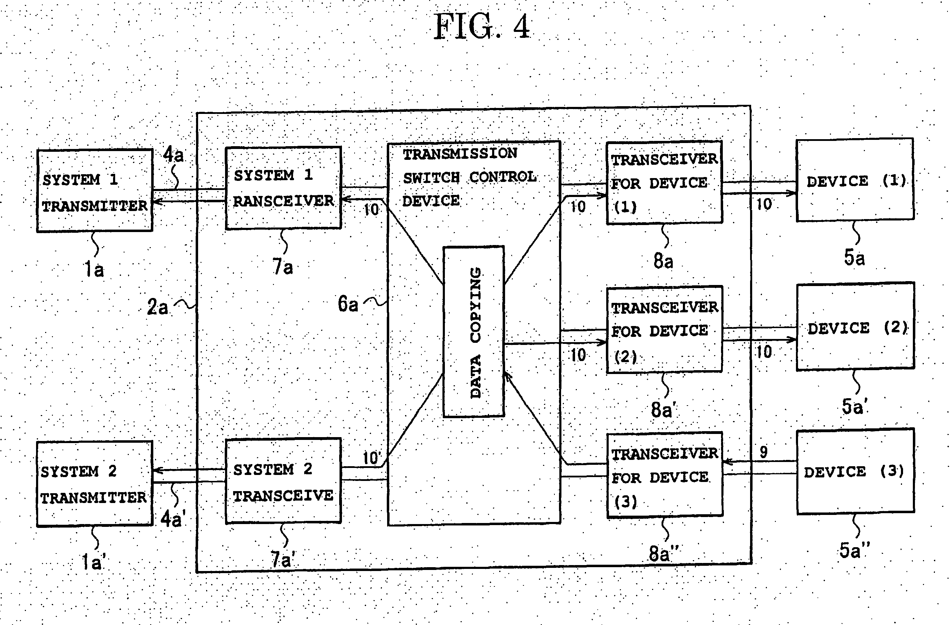

Next, the operation of a transmission system for rail vehicles according to the present invention will be described with reference to FIG. 4 to FIG. 10. FIG. 4 shows the case where data is transmitted from a device (3) 5a" that is mounted on a vehicle No. 1. In this case, the received data (multi-cast data) 9 from the device (3) 5a" is input to the transmission switch control device 6a through the transceiver 8a" for the devices (3). If the transmission switch control device 6a ascertains that the destination MAC address is a multi-cast address, it creates system 1 data 10 and system 2 data 10' constituting copies of the received data 9.

The transmission switch control device 6a transmits the system 1 data 10 through the system 1 transceiver 7a to the system 1 transmitter 1a and transmits the system 2 data 10' through the system 2 transceiver 7a' to the system 2 transmitter 1a'. Also, since the received data is multi-cast, the transmission switch control device 6a transmits the system 1 data 10 also to the device (1) 5a and device (2) 5a'. It should be noted that, if the received data is unicast data, and the destination MAC address does not coincide with the device (1) 5a, device (2) 5a', data is only transmitted to the system 1 transmitter 1a and the system 2 transmitter 1a'.

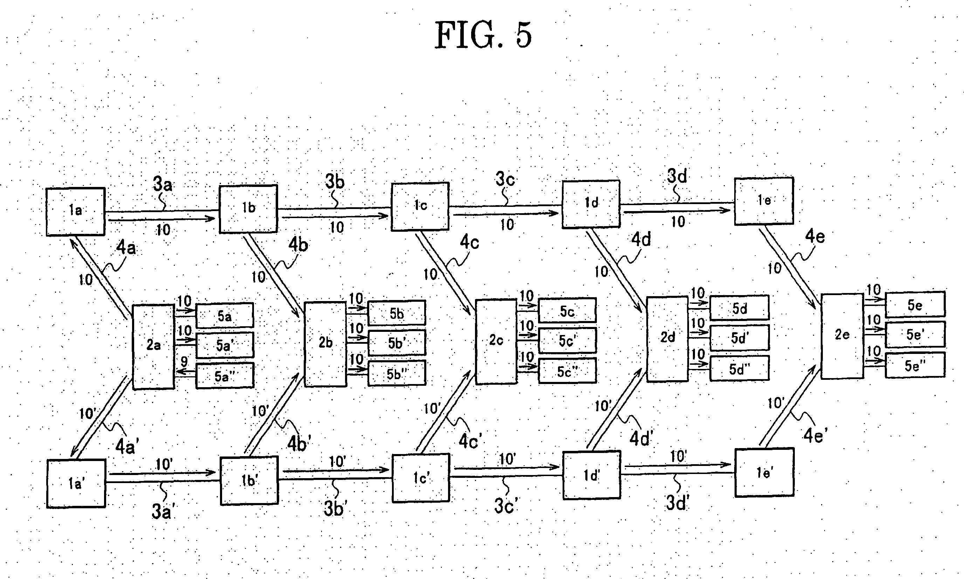

Next, with reference to FIG. 5, the flow of data to the various vehicles will be described in system 1 priority mode, in the case where data is transmitted by the device (3) 5a". The data that is transmitted from the No. 1 vehicle device (3) 5a" (device (3) 5a" of the No.1 vehicle) is input to the transmission switch 2a and the transmission switch 2a sends the system 1 data 10 to the system 1 transmitter 1a by the system 1 branch transmission path 4a and simultaneously sends the system 2 data 10' to the system 2 transmitter 1a' by the system 2 transmission path 4a'. The system 1 transmitter 1a sends the system 1 data from the transmission switch 2a to the neighboring system 1 transmitter 1b through the system 1 main transmission path 3a. The system 1 transmitter 1b of the No. 2 vehicle sends the received system 1 data 10 to the system 1 transmitter 1c through the main transmission path 3b and also transmits this through the system 1 branch transmission path 4b to the transmission switch 2b of its own vehicle. The system 1 transmitters 1c, 1d and 1e also operate in the same way: In this way, the system 1 transmitters 1a to 1e can share the system 1 data 10. Also, the transmission switches 2b to 2e receive the system 1 data 10.

On the other hand, the system 2 transmitter 1a' of the No. 1 vehicle receives the system 2 data 10' from the transmission switch 2a and, by same action as in the case of system 1, causes the system 2 data 10' to be received by the system 2 transmitters 1a' to le' and the transmission switches 2b to 2e of the No. 2 and subsequent vehicles. The respective transmission switches 2b to 2e receive system 1 data 10 from the respective system 1 transmitters 1b to 1e and receive system 2 data 10' from the respective system 2 transmitters 1b' to 1e'. It may be noted that the system 1 data 10 and system 2 data 10' are originally the same data. A comparison of the system 1 data 10 and system 2 data 10' is effected.

Being currently in system 1 priority mode, the respective transmission switches 2b to 2e transmit the system 1 data 10 from the system 1 to the devices 5, 5', 5" that are connected with themselves. In this way, the data is shared by all the transmitters 1, 1' and all the devices 5, 5', 5".

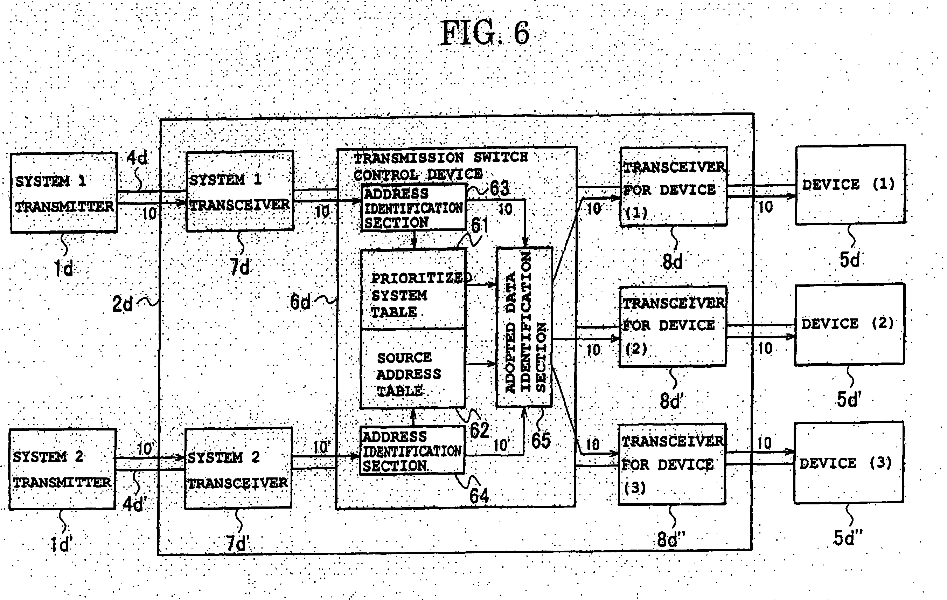

Next, the operation of the transmission switch 2 that receives system 1 data 10 and system 2 data 10' from the transmitters 1, 1' will be described with reference to FIG. 6. For example, the transmission switch 2d that is installed on the No. 4 vehicle receives system 1 data 10 through the branch transmission path 4d from the system 1 transceiver 7d and receives system 2 data 10' through the branch transmission path 4d' from the system 2 transceiver 7d'. The system 1 data 10 and the system 2 data 10' are both sent to the transmission switch control device 6d.

As shown in FIG. 6, as functions under the control of the control program, the transmission switch control devices 6 comprise a prioritized system table 61 that registers which of system 1 and system 2 is the prioritized system, a source address registration table 62 that registers a source address, an address identification section 63 that identifies a system 1 address, an address identification section 64 that identifies a system 2 address, and an adopted data identification section 65 that identifies which data is to be validly adopted.

At this point, the transmission switch control device 6d extracts the destination MAC address in the address identification sections 63, 64. The prioritized system is then acquired by comparing the extracted destination MAC address and the prioritized system table 61. Now, since the current mode is system 1 priority mode, system 1 data 10 is adopted. It should be noted that, if the current mode were system 2 priority mode, the system 2 data 10' would be adopted. The transmission source MAC address of the adopted data and the system 1, which is the prioritized system of the adopted data, are stored in the source address table 62 corresponding to the destination MAC address and the corresponding timer is cleared. A plurality (i.e. a number equal to or greater than that of the transmitters) of source address tables 62 corresponding to the destination MAC address are prepared for the destination MAC address 1, to ensure that the transmission source MAC address is not rewritten.

Next, the transmission switch control device 6d transmits the adopted system 1 data 10 through the respective transceivers 8d, 8d', 8d" of the devices (1) to (3) to the device (1) 5d, device (2) 5d' and the device (3) 5d".

It should be noted that, if the data is unicast, the system 1 data 10 is transmitted only to devices whose destination MAC address agrees.

Also, although, in this embodiment, the description was given for the case where the source data stored in the source address table 62 is the source MAC address, it would also be possible to employ the source IP address contained in the IP header. Furthermore, in cases where the destination MAC address of the system 1 data 10 and system 2 data 10' does not coincide with the prioritized system table 61, the decision may be made in accordance with a prescribed order of priority, or the data may be discarded.

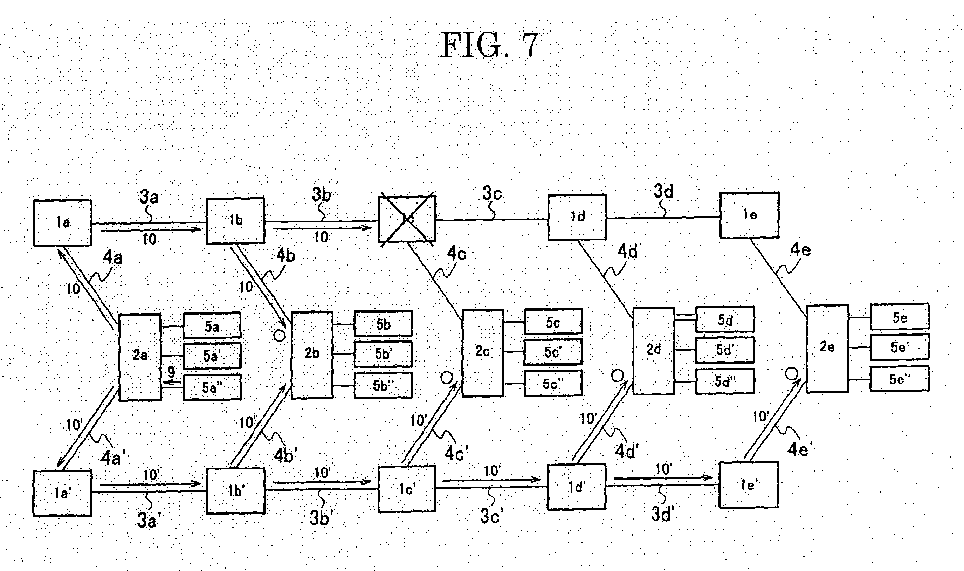

Next, the operation in the case where the system 1 transmitter 1c of the No. 3 vehicle is faulty will be described with reference to FIG. 7 to FIG. 9. FIG. 7 shows the flow of transmission data of the No. 1 device (3) 5a" in the case where the system 1 transmitter 1c of the No. 3 vehicle is faulty. In this example, since the system 1 transmitter 1c of the No. 3 vehicle is faulty, although the system 1 data 10 reach the system 1 transmitter 1a of the No. 1 vehicle and the system 1 transmitter 1b of the No. 2 vehicle, they do not reach the system 1 transmitter 1d of the No. 4 vehicle or the system 1 transmitter 1e of the No. 5 vehicle, which are on the downstream side thereof. Consequently, although the transmission switch 2b of the No. 2 vehicle can receive both the system 1 data 10 and the system 2 data 10', the transmission switches 2c, 2d, 2e of the No. 3 and subsequent vehicles cannot receive the system 1 data 10 but can only receive the system 2 data 10'.

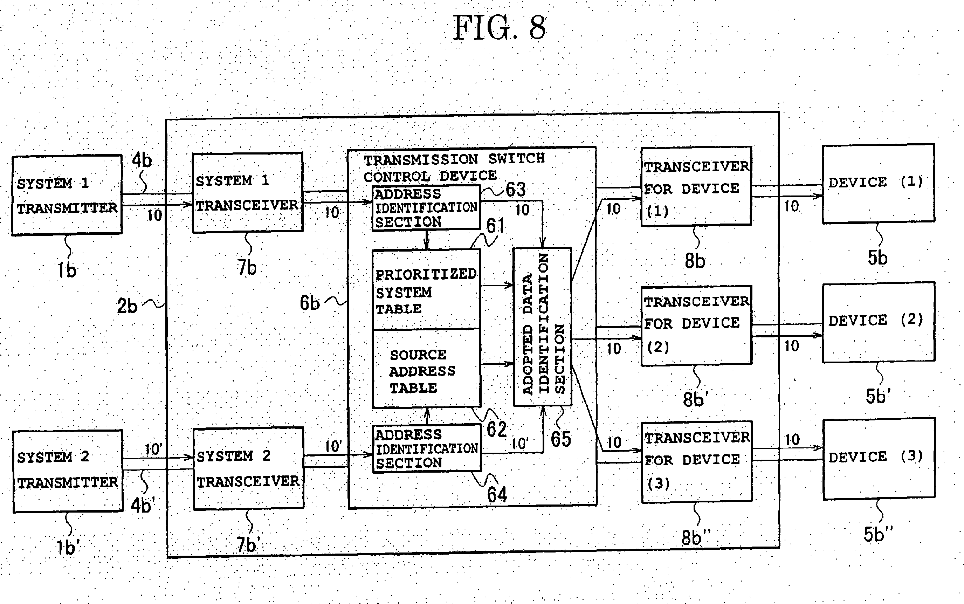

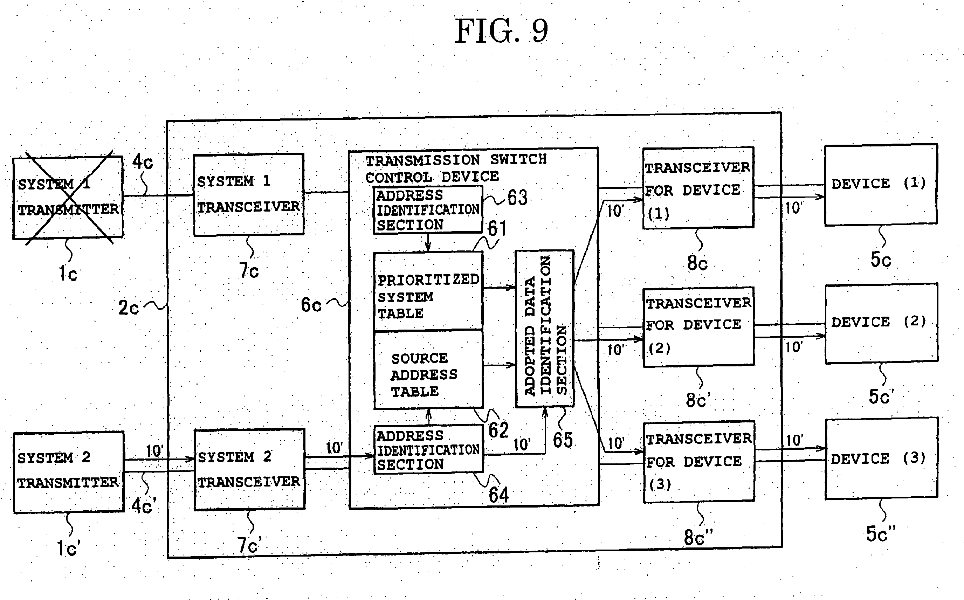

The operation of the transmission switch 2b of the No. 2 vehicle and the transmission switch 2c of the No. 3 vehicle under these conditions will now be described with reference to FIG. 8 and FIG. 9. As shown in FIG. 8, since the system 1 data 10 and system 2 data 10' are received by the transmission switch 2b of the No. 2 vehicle, just as in the case described above, the system 1 data 10 specified in the prioritized system table 61 is adopted, and transmitted to the device (1) 5b, device (2) 5b' and device (3) 5b".

In contrast, as shown in FIG. 9, in the case of the transmission switch 2c of the No.3 vehicle, the system 1 data 10 is not received and only the system 2 data 10' is received. The transmission switch control device 6c ascertains by referring to the prioritized system table 61 that the prioritized system is system 1. Next, the transmission switch control device 6c refers to the source address table 62 corresponding to the destination MAC address. Since the timer is cleared every time this source address table 62 is accessed, when the system 1 transmitter 1c fails, the corresponding timer times out. If the prioritized system does not coincide, the adopted data identification section 65 in the transmission control device 6c identifies the time of the source address table 62 and, on ascertaining that the corresponding system 1 transmission path or system 1 transmitter was abnormal when time-out occurred, adopts the system 2 data 10' and transmits this to the device (1) 5c, device (2) 5c' and device (3) 5c". In this way, data can be distributed to all of the devices of the device (1) 5c, device (2) 5c' and the device (3) 5c" of the No. 3 vehicle in question.

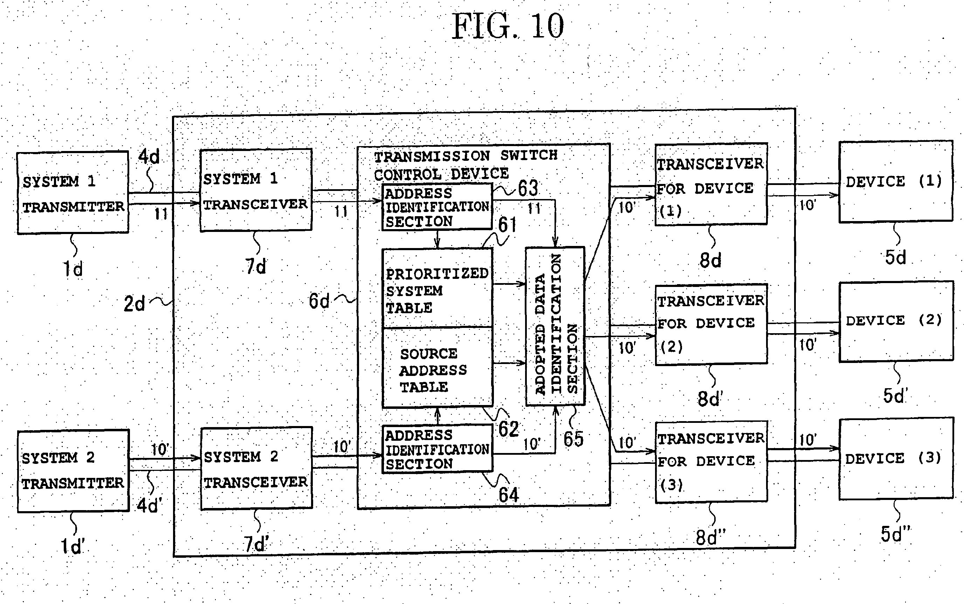

Next, the operation of the transmission switch 2d of the No. 4 vehicle in the case where the system 1 transmitter 1c of the No. 3 vehicle has failed will be described with reference to FIG. 10. The transmission switch 2d of the No. 4 vehicle inputs from system 2 the system 2 data 10' (data transmitted by the device (3) 5a" of the No. 1 vehicle). Let us assume that, concurrently, the system 1 data 11 transmitted from system 1 by the device (3) 5d " of the No. 5 vehicle is received. More specifically, let us assume that, in terms of timing, the system 2 data 10' is received first and the system 1 data 11 is received subsequently.

In this case, the transmission switch 2d of the No 4 vehicle confirms, by referencing the prioritized system table 61 from the destination MAC address of the system 2 data 10', that the No. 1 system is the prioritized system. However, since the corresponding timer of the source address table 62 has timed out, the system 2 data 10' is adopted, and transmitted to the device (1) 5d, device (2) 5d' and device (3) 5d".

Next, the transmission switch 2d of the No. 4 vehicle receives the system 1 data 11, and confirms by referencing the prioritized system table 61 that the prioritized system is system 1. The transmission switch 2d transmits the system 1 data 11 to the device (1) 5d, device (2) 5d' and device (3) 5d" and updates the corresponding source address table 62.

In this way, by providing a prioritized system table 61 for each destination MAC address and a plurality of source address tables 62 for each destination MAC address, even if for example the devices (1) of all of the vehicles use the same destination MAC address, redundancy can be ensured. Consequently, with the transmission system for rail vehicles according to the present embodiment, a network can be constructed providing high redundancy and excellent maintainability.

Obviously, numerous additional modifications and variations of the present invention are possible in light of the above teachings. It is therefore to be understood that within the scope of the appended claims, the present invention may be practiced otherwise than as specifically described herein.

## Claims

1. A transmission system for rail vehicles comprising:
a respective system 1 transmitter (1a,1b,1c,1d,1e) for each of a plurality of rail vehicles, each system 1 transmitter having a plurality of transmission ports, being arranged in the respective rail vehicle and being adapted to transmit data received from any of said ports to a required transmission port in response to a prescribed instruction;
a respective system 2 transmitter 1a',1b',1c',1d',1e') for each of the plurality of rail vehicles, each system 2 transmitter having a plurality of transmission ports, being arranged in the respective rail vehicle and being adapted to transmit data received from any of said ports to a required transmission port in response to a prescribed instruction;
a system 1 transmission path (3a,3b,3c,3d) connected between the system 1 transmitters (1a,1b,1c,1d,1e) of said plurality of rail vehicles;
a system 2 transmission path (3a',3b',3c',3d') connected between the system 2 transmitters (1a',1b',1c',1d',1e') of said plurality of rail vehicles; and
a respective transmission switch (2a,2b,2c,2d,2e) for each of the plurality of rail vehicles adapted to connect via respective branch transmission paths (4a,4b,4c,4d,4e; 4a',4b',4c',4d',4e') the respective system 1 transmitter and system 2 transmitter arranged in the same rail vehicle with a respective plurality of devices (5a,5a',5a'';5b,5b',5b";5c,5c',5c";5d,5d',5d";5e,5e',5e"), arranged in the same rail vehicle, and **characterized in that**:
each said transmission switch (2a,2b,2c,2d,2e) is equipped with a control function for transmitting incoming data from any of said connected plurality of devices to the respective system 1 transmitter and the respective system 2 transmitter, and for transmitting incoming data from one or both of the respective system 1 transmitter and the respective system 2 transmitter to at least a destination device of the connected plurality of devices, and employing either system 1 type data or system 2 type data in accordance with a pre-set priority mode.

2. The transmission system for rail vehicles according to claim 1,
wherein if a said system 1 transmitter (1a,1b,1c,1d,1e) is normal, the respective transmission switch (2a,2b,2c,2d,2e) is adapted to set a prioritized system to system 1 and to adopt data incoming from said system 1 transmitter and if said system 1 transmitter is abnormal, to set a prioritized system to system 2 and to adopt data incoming from said system 2 transmitter.

3. The transmission system for rail vehicles according to claim 1,
wherein each said transmission switch (2a,2b,2c,2d,2e) is provided with a prioritized system table (61) for each destination device address of the connected plurality and is adapted to identify a prioritized system by searching said prioritized system table using said destination address in respect of incoming data from said system 1 transmitter and system 2 transmitter and to adopt only data from a system that coincides with said prioritized system.

4. The transmission system for rail vehicles according to claim 3,
wherein each said transmission switch (2a,2b,2c,2d,2e) is adapted to update said prioritized system table in accordance with said destination device address of data incoming from said system 1 transmitter and system 2 transmitter, and, if reception from said prioritized system corresponding to said destination address cannot be achieved for at least a fixed time, is adapted to invert said prioritized system of said corresponding prioritized system table.

5. The transmission system for rail vehicles according to claim 3,
wherein said prioritized system table of each said transmission switch is set by transmission from said system 1 transmitter or system 2 transmitter that is connected with said transmission switch.

6. The transmission system for rail vehicles according to claim 3,
wherein each said transmission switch is adapted to store in a source address table (62) a source address and said destination device address for each set of received data whose destination address is a respective device of said plurality of devices.

7. The transmission system for rail vehicles according to claim 6,
wherein if data is received from a transmitter that is not of said prioritized system, said transmission switch is adapted to search said source address table (62) using said source address of received data and, if said corresponding source address is unused by said prioritized system for at least a fixed period, to adopt said received data as data for a device.

## Patentansprüche

1. Übertragungssystem für Schienenfahrzeuge, welches umfasst:
einen jeweiligen System-1-Übertrager (1a, 1b, 1c, 1d, 1e) für jedes aus einer Vielzahl an Schienenfahrzeugen, wobei jeder System-1-Übertrager eine Vielzahl an Übertragungsanschlüssen aufweist, angeordnet in dem jeweiligen Schienenfahrzeug und angepasst, Daten zu übertragen, welche aus einem der Anschlüsse empfangen werden, an einen benötigten Übertragungsanschluss ansprechend auf eine vorgeschriebene Instruktion;
einen jeweiligen System-2-Übertrager (1a', 1b', 1c', 1d', 1e') für jedes aus der Vielzahl an Schienenfahrzeugen, wobei jeder System-2-Übertrager eine Vielzahl an Übertragungsanschlüssen aufweist, angeordnet in dem jeweiligen Schienenfahrzeug und angepasst, Daten zu übertragen, welche aus einem der Anschlüsse empfangen werden, an einen benötigten Übertragungsanschluss ansprechend auf eine vorgeschriebene Instruktion;
einen System-1-Übertragungsweg (3a, 3b, 3c, 3d), welcher zwischen den System-1-Übertragern (1a, 1b, 1c, 1d, 1e) der Vielzahl an Schienenfahrzeugen verbunden ist;
einen System-2-Übertragungsweg (3a', 3b', 3c', 3d'), welcher zwischen den System-2-Übertragern (1a', 1b', 1c', 1d', 1e') der Vielzahl an Schienenfahrzeugen verbunden ist; und
ein jeweiliges Übertragungsswitch (2a, 2b, 2c, 2d, 2e) für jedes aus der Vielzahl an Schienenfahrzeugen, welches angepasst ist, über jeweilige Zweigübertragungswege (4a, 4b, 4c, 4d, 4e; 4a', 4b', 4c', 4d', 4e') den jeweiligen System-1-Übertrager und System-2-Übertrager zu verbinden, angeordnet in demselben Schienenfahrzeug, mit einer jeweiligen Vielzahl an Vorrichtungen (5a, 5a', 5a"; 5b, 5b', 5b"; 5c, 5c', 5c"; 5d, 5d', 5d"; 5e, 5e', 5e"), angeordnet in demselben Schienenfahrzeug, und **dadurch gekennzeichnet, dass**:
jedes Übertragungsswitch (2a, 2b, 2c, 2d, 2e) mit einer Steuerungsfunktion ausgestattet ist, um ankommende Daten aus einer aus der verbundenen Vielzahl an Vorrichtungen an den jeweiligen System-1-Übertrager und den jeweiligen System-2-Übertrager zu übertragen, und um ankommende Daten aus einem oder beiden aus dem jeweiligen System-1-Übertrager und dem jeweiligen System-2-Übertrager an wenigstens eine Zielvorrichtung aus der verbundenen Vielzahl an Vorrichtungen zu übertragen, und System-1-TypDaten oder System-2-Typ-Daten gemäß einem voreingestellten Prioritätsmodus zu verwenden.

2. Übertragungssystem für Schienenfahrzeuge nach Anspruch 1, wobei, falls ein System-1-Übertrager (1a, 1b, 1c, 1d, 1e) normal ist, das jeweilige Übertragungsswitch (2a, 2b, 2c, 2d, 2e) angepasst ist, ein priorisiertes System als System 1 einzustellen und Daten anzunehmen, welche aus dem System-1-Übertrager ankommen, und, falls der System-1-Übertrager abnormal ist, ein priorisiertes System als System 2 einzustellen und Daten anzunehmen, welche aus dem System-2-Übertrager ankommen.

3. Übertragungssystem für Schienenfahrzeuge nach Anspruch 1, wobei jedes Übertragungsswitch (2a, 2b, 2c, 2d, 2e) mit einer Priorisiertes-System-Tabelle (61) für jede Zielvorrichtungsadresse der verbundenen Vielzahl ausgestattet ist und angepasst ist, ein priorisiertes System durch Durchsuchen der Priorisiertes-System-Tabelle zu identifizieren unter Nutzung der Zieladresse in Bezug auf ankommende Daten aus dem System-1-Übertrager und System-2-Übertrager und nur Daten aus einem System anzunehmen, welches mit dem priorisierten System übereinstimmt.

4. Übertragungssystem für Schienenfahrzeuge nach Anspruch 3, wobei jenes Übertragungsswitch (2a, 2b, 2c, 2d, 2e) angepasst ist, die Priorisiertes-System-Tabelle gemäß der Zielvorrichtungsadresse von Daten, welche aus dem System-1-Übertrager und dem System-2-Übertrager ankommen, zu aktualisieren, und, falls ein Empfang von dem priorisierten System entsprechend der Zieladresse für wenigstens eine feste Zeit nicht erzielt werden kann, angepasst ist, das priorisierte System der entsprechenden Priorisiertes-System-Tabelle zu invertieren.

5. Übertragungssystem für Schienenfahrzeuge nach Anspruch 3, wobei die Priorisiertes-System-Tabelle jedes Übertragungsswitchs (2a, 2b, 2c, 2d, 2e) durch eine Übertragung aus dem System-1-Übertrager oder System-2-Übertrager eingestellt wird, welcher mit dem Übertragungsswitch verbunden ist.

6. Übertragungssystem für Schienenfahrzeuge nach Anspruch 3, wobei jedes Übertragungsswitch angepasst ist, in einer Quellenadressentabelle (62) eine Quellenadresse und die Zielvorrichtungsadresse zu speichern für jede Gruppe von empfangenen Daten, deren Zieladresse eine jeweilige Vorrichtung aus der Vielzahl an Vorrichtungen ist.

7. Übertragungssystem für Schienenfahrzeuge nach Anspruch 6, wobei, falls Daten aus einem Übertrager empfangen werden, welcher nicht von dem priorisierten System ist, das Übertragungsswitch angepasst ist, die Quellenadressentabelle (62) zu durchsuchen unter Nutzung der Quellenadresse der empfangenen Daten und, falls die entsprechende Quellenadresse durch das priorisierte System für wenigstens eine feste Periode nicht genutzt wird, die empfangenen Daten als Daten für eine Vorrichtung anzunehmen.

## Revendications

1. Système de transmission pour véhicules ferroviaires comprenant :
un émetteur de système 1 respectif (1a, 1b, 1c, 1d, 1e) pour chaque véhicule d'une pluralité de véhicules ferroviaires, chaque émetteur de système 1 comportant une pluralité de ports de transmission, agencé dans le véhicule ferroviaire respectif et adapté pour transmettre des données reçues en provenance de l'un quelconque desdits ports à un port de transmission requis en réponse à une instruction prescrite ;
un émetteur de système 2 respectif (1a', 1b', 1c', 1d', 1e') pour chaque véhicule de la pluralité de véhicules ferroviaires, chaque émetteur de système 2 comportant une pluralité de ports de transmission, agencé dans le véhicule ferroviaire respectif et adapté pour transmettre des données reçues en provenance de l'un quelconque desdits ports à un port de transmission requis en réponse à une instruction prescrite ;
une voie de transmission de système 1 (3a, 3b, 3c, 3d) reliée entre les émetteurs de système 1 (1a, 1b, 1c, 1d, 1e) de ladite pluralité de véhicules ferroviaires ;
une voie de transmission de système 2 (3a', 3b', 3c', 3d') reliée entre les émetteurs de système 2 (1a', 1b', 1c', 1d', 1e') de ladite pluralité de véhicules ferroviaires ; et
un commutateur de transmission respectif (2a, 2b, 2c, 2d, 2e) pour chaque véhicule de la pluralité de véhicules ferroviaires adapté pour relier par le biais de voies de transmission secondaires respectives (4a, 4b, 4c, 4d, 4e ; 4a', 4b', 4c', 4d', 4e') l'émetteur de système 1 et l'émetteur de système 2 respectifs agencés dans le même véhicule ferroviaire à une pluralité respective de dispositifs (5a, 5a', 5a" ; 5b, 5b', 5b" ; 5c, 5c', 5c" ; 5d, 5d', 5d" ; 5e, 5e', 5e"), agencés dans le même véhicule ferroviaire, et **caractérisé en ce que** :
chaque dit commutateur de transmission (2a, 2b, 2c, 2d, 2e) est équipé d'une fonction de commande destinée à transmettre des données entrantes provenant d'un dispositif quelconque de ladite pluralité reliée de dispositifs à l'émetteur de système 1 respectif et à l'émetteur de système 2 respectif, et à transmettre des données entrantes provenant de l'émetteur de système 1 respectif et/ou de l'émetteur de système 2 respectif à au moins un dispositif de destination de la pluralité reliée de dispositifs, et à employer les données de type système 1 ou les données de type système 2 conformément à un mode de priorité prédéfini.

2. Système de transmission pour véhicules ferroviaires selon la revendication 1,
dans lequel, si un dit émetteur de système 1 (1a, 1b, 1e, 1d, 1e) est normal, le commutateur de transmission respectif (2a, 2b, 2c, 2d, 2e) est adapté pour établir un système priorisé sur le système 1 et pour adopter des données entrant en provenance dudit émetteur de système 1 et, si ledit émetteur de système 1 est anormal, pour établir un système priorisé sur le système 2 et pour adopter des données entrant en provenance dudit émetteur de système 2.

3. Système de transmission pour véhicules ferroviaires selon la revendication 1,
dans lequel chaque dit commutateur de transmission (2a, 2b, 2c, 2d, 2e) est pourvu d'un tableau de système priorisé (61) pour chaque adresse de dispositif de destination de la pluralité reliée et est adapté pour identifier un système priorisé en recherchant ledit tableau de système priorisé à l'aide de ladite adresse de destination pour ce qui est des données entrantes provenant dudit émetteur de système 1 et dudit émetteur de système 2 et pour adopter uniquement des données provenant d'un système qui coïncide avec ledit système priorisé.

4. Système de transmission pour véhicules ferroviaires selon la revendication 3,
dans lequel chaque dit commutateur de transmission (2a, 2b, 2c, 2d, 2e) est adapté pour mettre à jour ledit tableau de système priorisé conformément à ladite adresse de dispositif de destination de données entrant en provenance dudit émetteur de système 1 et dudit émetteur de système 2, et, si la réception en provenance dudit système priorisé correspondant à ladite adresse de destination ne peut pas être réalisée pendant au moins un temps fixe, est adapté pour inverser ledit système priorisé dudit tableau de système priorisé correspondant.

5. Système de transmission pour véhicules ferroviaires selon la revendication 3,
dans lequel ledit tableau de système priorisé de chaque dit commutateur de transmission est établi par transmission depuis ledit émetteur de système 1 ou ledit émetteur de système 2 qui est relié audit commutateur de transmission.

6. Système de transmission pour véhicules ferroviaires selon la revendication 3,
dans lequel chaque dit commutateur de transmission est adapté pour stocker dans un tableau d'adresse de source (62) une adresse de source et ladite adresse de dispositif de destination pour chaque ensemble de données reçues dont l'adresse de destination est un dispositif respectif de ladite pluralité de dispositifs.

7. Système de transmission pour véhicules ferroviaires selon la revendication 6,
dans lequel, si les données sont reçues en provenance d'un émetteur qui n'est pas dudit système priorisé, ledit commutateur de transmission est adapté pour rechercher ledit tableau d'adresse de source (62) à l'aide de ladite adresse de source de données reçues et, si ladite adresse de source correspondante n'est pas utilisée par ledit système priorisé pendant au moins une période fixe, pour adopter lesdites données reçues en tant que données pour un dispositif.
